# EUROPEAN PATENT APPLICATION

(11) **EP 3 498 670 A1**
(43) Date of publication of application: **19.06.2019**
(21) Application number: 16912459.1
(22) Date of filing: 22.08.2016
(51) Int. Cl.: C01B 32/192, C25B 1/00, C25B 9/12, C25B 11/12

(54) **QUANTUM CARBON AND METHOD AND DEVICE FOR PRODUCING SAME**

(30) Priority: 10.08.2016 CN 201610654182; 10.08.2016 CN 201610653441; 10.08.2016 CN 201610653442; 10.08.2016 CN 201610652205; 10.08.2016 CN 201610652204; 10.08.2016 CN 201610654183; 10.08.2016 CN 201610654264; 10.08.2016 CN 201610653390
(71) Applicant: Yulinghua Technology Co. Ltd, Wuhan, Hubei 430000 (CN)
(72) Inventor: ZHU, Guanghua, Beijing 100080 (CN)
(74) Representative: Franke, Dirk
(86) International application number: PCT/CN2016/096157
(87) International publication number: WO 2018/028004

(57) **Abstract**

Provided are a quantum carbon, a method and an apparatus for producing the same. The quantum carbon is a nanostructured crystal, including single- or multi-layer graphene, the surface layer thereof contains a compound of carbon, hydrogen, oxygen and nitrogen, the compound includes a mixture of one or more of compounds selected from aromatic hydrocarbon with condensed ring, compound containing carbon-oxygen single bond, carbon-oxygen double bond, and carbon-hydrogen bond. The apparatus comprises an electrochemical oxidation generator (1), an ion intercalating device (3), a graphite interlayer stripping and dispersing device (2), a separation and concentration device, and an electric control part for controlling the above parts. Large-scale production is achieved.

## Description

### TECHNICAL FIELD OF THE INVENTIION

Embodiments of the invention relate to a method and a device, in particular to quantum carbon and a method and apparatus for preparing the quantum carbon.

### BACKGROUND OF THE INVENTIION

As known, carbon is one of elements which are most closely related to human world and important in nature. It has various electron orbital characteristics of SP, SP2, SP3 hybrid, especially the heterogeneity of sp2 hybrid of carbon-carbon double bond, which leads to crystal's anisotropy, and makes carbon structural materials with carbon element as the only constituent elements have various properties. Moreover, new carbon materials are still being discovered and artificially manufactured. It can be said that no element like carbon as a single element can form such a large number of substances with different structures and properties such as three-dimensional diamond crystals, two-dimensional graphite laminates, one-dimensional carbene, carbon nanotubes and zero fullerene molecules and so on. For example, graphene sheet material in the carbon structure has so many advantages, and has a wide range of applications in fields of solar cells, sensors, nano-electronics, high-performance nano-electronic devices, composite materials, field emission materials, gas sensors and energy storage and so on. In recent years, scientists have been developing method to prepare single layer graphene, especially method to prepare graphene with high quality, high yield, low cost and stable structure. At present, there are several known and mature mainly methods for preparing graphene, such as the following: (1) stripping method, including micromechanical stripping method and solvent stripping method, etc.; (2) growth method, including crystal epitaxial growth, oriented epitaxy, chemical vapor deposition, etc; (3) redox graphite method, including common Hummers method, Standenmaier method, Brodie method, etc.; (4) other methods, such as arc discharge method, graphite interlayer chemical route method, as well as high temperature quenching method and carbon nanotube stripping method, etc. which are newly developed. Among them, Redox graphite method involves simple and diversified process, and is a common method to prepare graphene, but only suitable for a small amount of laboratory preparation for research, since preparation with large amount is likely to produce a large amount of waste acid, wastewater and others which may cause environmental pollution.

Similarly, there is so far no fundamental breakthrough in the cost and environmental protection of preparation of materials from carbon structures with such excellent properties.

Large-scale preparation of high-quality, low-cost, environmentally friendly carbon crystal materials is the basis of all applications, the development of low-cost and controllable preparation method is the most urgent problem.

The quantum carbon comprises monolayer graphene of carbon particle with diameter of 0.3-100nm, a multilayer graphene, a nano-carbon structural body, in which compound containing carbon, hydrogen, oxygen and nitrogen is on the surface of the carbon particle, contains polycyclic aromatic hydrocarbons, compound containing carbon-oxygen single bond, compound containing carbon-oxygen double bond, and compound containing hydrocarbon bond.

Quantum carbon is a kind of thermodynamics unstable but relatively kinetically stable metastable substance of carbon element. Substrates constituting quantum carbon are mono-disperse carbon atoms or carbon clusters. Taking graphene as an example, when graphene lamellar produces a certain bending structure, it cause the equilibrium carbon atom to have a certain stress energy and be in high energy state. Energy of carbon elements in different carbon isomers is different, and the energy of carbon atoms in graphite is zero as the most stable state. Maximum energy of carbon atom in fullerene sphere C60 is about 0.45eV, C240 with about 0.15eV. Energy of carbon atom in carbon nanotube and diamond is 0.02 to 0.03eV. In order to overcome the stress energy of graphene bending structure, formation heat from different carbon isomers is different. For the most stable graphite, the formation heat Hf(g·c) is zero, the diamond with 1.67 KJ/mol, C60 with 42.51KJ/mol, C70 with 40.38KJ/mol. In order to make the graphite become a bending structure to form different carbon isomers, higher energy must be applied from the outside to form monodisperse carbon atoms or clusters of carbon atoms with higher energy in the excited state. The supply of the controllable excited state energy can be realized by the special processing method of embodiments of the invention, with different carbon structures being prepared selectively.

### SUMMARY OF THE INVENTION

The above technical problems are mainly solved through the following technical solutions of embodiments of the invention:
A quantum carbon, characterized in that the quantum carbon is crystalline body of quantum carbon solution, which is nano-carbon structural body comprising monolayer graphene or multilayer graphene, surface layer of the crystalline body is compound containing carbon, hydrogen, oxygen and nitrogen which includes polycyclic aromatic hydrocarbons, compound containing carboxy-oxygen single bond, compound containing carboxy-oxygen double bond, mixture of one or more kinds of compounds containing hydrocarbon bond, proportion of each element in the mixture is 45%-55% C, 0.2% -2.0% H, 0.1% - 0.3% N, and 45% -65% O.

The surface layer of the crystalline body refers to the compound element in the surface layer of the crystal particle, that is, the element content of the whole mixture in the quantum carbon solution (average result of three times of measurement from CE-440 rapid element analyzer by EAI Company of US is that: C: 50.19%, H: 0.42%, N: 0.22%, O: 49.17%, analytical precision: 0.15%, analytical accuracy: 0.15%. The results show that number of oxygen groups in carbon nanoparticles as a whole is very high).

The quantum carbon solution is aqueous solution containing quantum carbon. The aqueous solution of the quantum carbon comprises carbon particles as following: monolayer grapheme (0.6nm ≤ particle diameter ≤ 50nm), multilayer grapheme (0.6nm≤particle diameter≤100nm), carbon structure particle (0.6nm≤particle diameter≤200nm), quantum carbon (0.6nm<particle diameter<200nm);

Preferably, ORP of the quantum carbon solution is 280mv-500mv, conductivity σ is 1-10ms/cm, electromotive force is 280mv-380mv, pH value is 1.2-3.2, and concentration is 0.1%-0.45%.

Preferably, there are included an electrochemical oxidation generator part, an ion embedding device part, a graphite interlayer stripping and dispersing device part, a separating device part and a concentration device part which are connected head to end in turn. An electrical control part is used for controlling operation of the electrochemical oxidation generator part, the ion embedding device part, the graphite interlayer stripping and dispersing device part, the separation device part and the concentration device part.

Preferably, the electrochemical oxidation generator part includes a housing and at least a set of positive and negative plate generating components arranged in inner cavity of the housing. Left sidewall of the housing is provided with an liquid inlet a and an air inlet b, right sidewall of the housing is provided with an outlet c; the bottom of the housing is provided with a U-shaped bracket with a central shaft on the upper shelf, and the positive and negative plate generating components are arranged on the center shaft.

Preferably, the positive and negative plate generating components include a positive plate and a negative plate, which are arranged vertically. The positive plate is graphitized with three high properties (high density: specific gravity>1.80, high purity: graphite>99.9%, high strength: tensile strength>30.00MPa); the negative plate is a metal electrode plate made of 314# stainless steel or 314# stainless steel coated with Pt or Ni. 50 to 300 through-holes with diameter of 1 to 2mm are uniformly distributed on the negative plate. The center shaft is provided with a flexible gap adjusting device for adjusting the gap between the positive plate and the negative plate, and the adjusting range is 0.5 mm to 10 mm;

The flexible gap adjusting device includes a sliding plate perpendicular to the center shaft and an adjusting bolt fixed on the sliding blade, one end of adjusting spring is in contact with the positive and negative plate components and the other end thereof is in contact with the sliding plate. An insulated spring is set between the positive plate and the negative plate.

Preferably, the ion embedding device includes a pump body, a pipe system composed of several of horizontal pipes and L-shaped pipes and flanges, wherein an exciting rod is arranged at corner of the L-shaped pipes; one end of the pipe system is connected with output end of the pump body (3-4), the other end of the pipe system is a pipe end, which is coupled with at least one set of ion embedders, which are adjustable high-power focused ultrasonic transducers.

Preferably, the graphite layer stripping part comprises a housing, a stripping component arranged in the housing, an inlet and an outlet are set at two ends of the housing and closed through an end cover; the strip component includes a vertically arranged metal sheet A, a metal sheet B, a metal sheet C and a metal sheet D; corresponding structures of the metal sheet A, the metal sheet B, the metal sheet C and the metal sheet D are metal sheet structure A1, metal sheet A2, metal sheet structure B1, and metal sheet B2. Combination thereof includes metal sheet A- metal sheet C, or metal sheet B-metal sheet D, or metal sheet A-metal sheet B, or metal sheet D-metal sheet A-metal sheet B-metal sheet C-metal sheet D;

The metal sheet structure A1 is a disk with hexagonal through-holes in uniform distribution, wherein center of the disk is center of central hole. The metal sheet B1 is same as the metal sheet A1 in shape and size of holes thereon, and is a disk with hexagonal through-holes in uniform distribution, but position of center of the disk is of horizontal deviation from that of metal sheet A1 by 1/2 of straight-line distance between the two holes. The metal sheet structure A2 is a disk with circle through-holes in uniform distribution, and center of the disk is center of central hole. The metal sheet B2 is same as the metal sheet A2 in shape and size of holes thereon, and is a disk with circle through-holes in uniform distribution, but position of center of the disk is of horizontal deviation from that of metal sheet A2 by 1/2 of straight-line distance between the two holes. The metal sheet structure C is a disk, wherein semi-circular through-holes are set on periphery thereof, and at least four limit screw holes uniformly distributed in the disk. The metal sheet structure D has a hole in center. Its combination includes A1-B1, A2-B2, A-B and DABCD.

The dispersing device part (2-2) includes a housing, two dispersing cavities which are arranged within the housing and connected in turn, namely, first dispersing cavity and second dispersing cavity, the output end of the second dispersing cavity is connected with output cavity outside the housing. The first dispersing cavity and the second dispersing cavity are two rectangular cavities, and output end of the first dispersing cavity is connected with input end of the second dispersing cavity. The output end of the second dispersing cavity is wedge-shaped with inclination angle α, the output cavity is trapezoid with obliquity angle β between two sides. Distance between the output end and the input end of the second dispersing cavity is L, width thereof is D1, aperture of the output end of the second dispersing cavity is D₂. Upper part of the housing is also provided with a vertical flow channel to junction between the first dispersing cavity and the second dispersing cavity, the channel is an inverted T-shaped channel, bottom thereof is rectangular and connected to junction between the first dispersing cavity and the second dispersing cavity; wherein 0.01≤(D₁-D₂)/L≤0. ,35°≤α≤75°,45°≤β≤85°.

A method for preparing quantum carbon, comprising the following steps:
Step 1, preparing deionized water with pH value of 6.5-7.2 and resistance value of 180 Megohm by using multilayer reverse osmosis membrane. A liquid inlet a is arranged on the left wall of the housing of the electrochemical oxidation generator part to enter the generator.
Step 2, using H₂O₂ agent (concentration of 30%) as 0.15% adding volume of water in the generator, making it enter the generator through the liquid inlet a.
Step 3, by the steps 1 and 2, the water and the agent entering into the electrochemical oxidation generator part, and standing not less than 24 hours. A preparation procedure is then initiated by a control cabinet. The control cabinet provides a high frequency pulse DC power supply, wherein output DC power supply is 0-150V, 0-100A, for regulating application of the electrochemical oxidation generator part (1), and provides multi-frequency band interactive emission wave with output end power of 1-5KVA, 20KHz-120KHz, for regulating application of the adjustable high-power focused ultrasonic transducers of ion embedding device.
Step 4, primary carbon sol liquid prepared by the electrochemical oxidation generator being transported into the ion embedding device part under the 3kg/cm³-10kg/cm³ pressure provided by pump, to prepare hydrogen and oxygen ions between graphite layers. After preparation by the graphite interlayer stripping part and the dispersing device part of the graphite interlayer stripping and dispersing device part, the carbon sol liquid is subjected to test with various parameters in the graphite interlayer stripping part and the dispersing device part device. When indices of the carbon sol liquid are within range of predetermined values, quantum carbon products of various forms are prepared by means of subsequent purification and concentration and so on to basic liquid as quantum carbon. If the indices of the carbon sol liquid are not within the range of predetermined values, the system will turn on pump 4 to make the carbon sol liquid return to the electrochemical oxidation generator part for cycle preparation.

The indices of the carbon sol liquid include that: pH value of the quantum carbon mixture liquid is 1.2 to 2.2, ORP value of electromotive force is 280mv to 380mv, conductivity value is 1.5ms/cm to 5.0ms/cm, solid-liquid concentration is based on unification trends of conductivity-solid content, electromotive force-solid content and the pH-solid content, and the solid content is 0.4% to 0.6%; temperature of the carbon sol liquid is 40°C to 70°C.

Each index of the carbon sol liquid involves detection of particle diameter of the quantum carbon particle, as well as distribution of particle diameter and frequency. The particle diameter and distribution of particle diameter and frequency of quantum carbon are in the range of 0.6nm to 1.0nm.

The quantum carbon solution is obtained after those parameters reach standard. The quantum carbon mixture liquid is subjected to centrifugation and fractionation process by a high speed centrifuge with a rotating speed of 15000rpm to 30000rpm set in a fractionation device.

Preferably, after centrifugation process on the quantum carbon mixture liquid, benzenehexacarboxylic acid with 0.001% to 0.010% of mass percentage is added to processed solution, as crystal seed, then stirring at high speed for 2 hours and heating to 70°C to 80°C, standing for more than 20 hours, lowering temperature to room temperature, so as to obtain hydrocarbon oxygen compound of benzenehexacarboxylic acid crystals with high purity.

Preferably, after centrifugation process on the quantum carbon mixture liquid, 0.1% to 1.0% alkane, 0.1% to 1.0% carbon alcohol or mixture of alkane and carbon alcohol with any proportion is added to the processed solution. The alkanes are such alkanes with C1-C12 carbon, one or more of which form mixed hydrocarbon. The carbon alcohol is carbon alcohol with C1-C12 carbon, one or more of which form mixed alcohols. It is subjected to high speed stirring for 1 hour and resting for 12 hours, to obtain hydrocarbon compound of octane C8H18 with high purity.

Therefore, embodiments of the invention have following advantages: with simple process, low cost, easy control, easy to realize large-scale production, no three wastes; single layer graphene, multilayer graphene and carbon structure particles produced are uniform, with high purity, stable in product quality.

### DESCRIPTION OF THE FIGURES

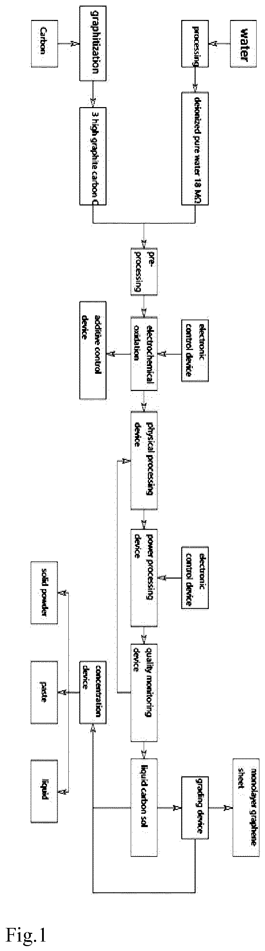

Fig.1 is a diagram of method of a preparation process of quantum carbon.

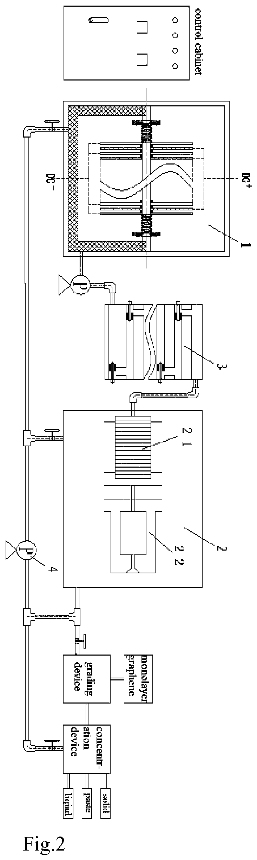

Fig.2 shows a composition of the preparation of the quantum carbon.

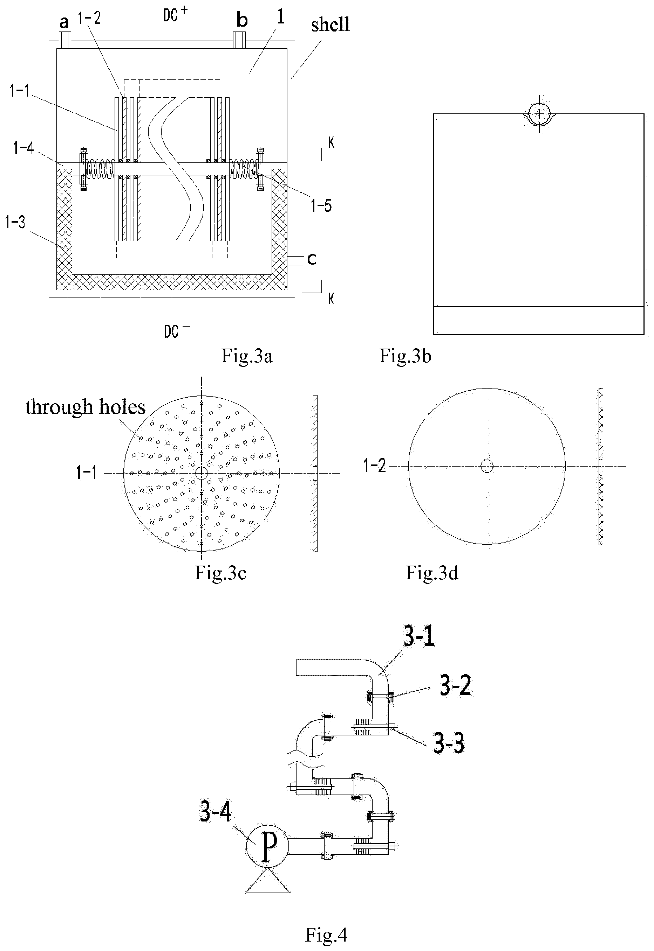

Fig.3a is a schematic diagram of the electrochemical oxidation generator part 1.
Fig.3b is a schematic diagram of the sectional structure along the K-K line in the electrochemical oxidation generator part 1.
Fig.3c is a structural diagram of the negative plate in the electrochemical oxidation generator part 1.
Fig.3d is a structural diagram of the positive plate in the electrochemical oxidation generator part 1.
Fig.4 is a structural diagram of the ion embedding device part 3.

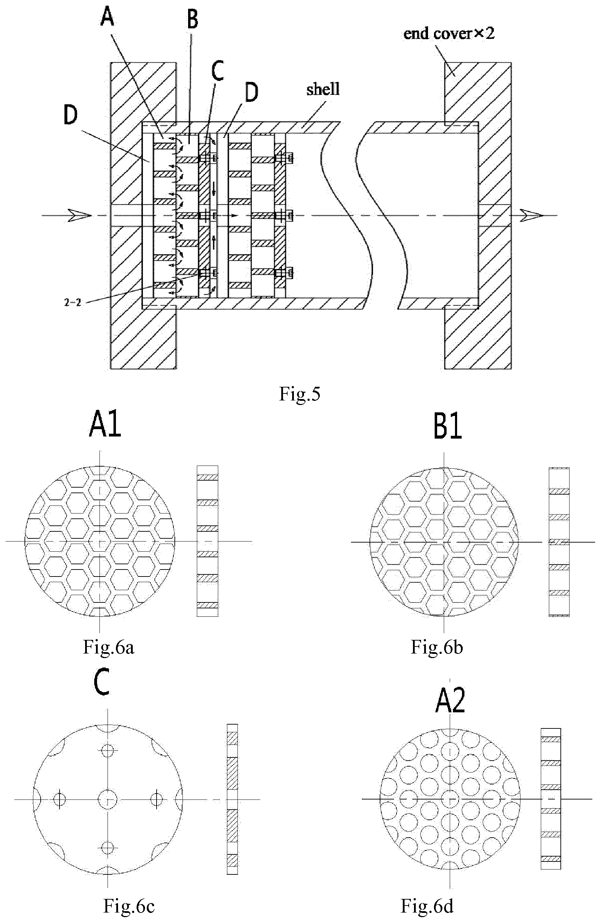

Fig.5 is a structural diagram of the graphite interlayer stripping dispersing device part 2.
Fig.6a is a stripping sheet diagram of A1 in the stripping component 2-1.
Fig.6b is a stripping sheet diagram of B1 in the stripping component 2-1.
Fig.6c is a stripping sheet diagram of C in the stripping component 2-1.
Fig.6d is a stripping sheet diagram of A2 in the stripping component 2-1.

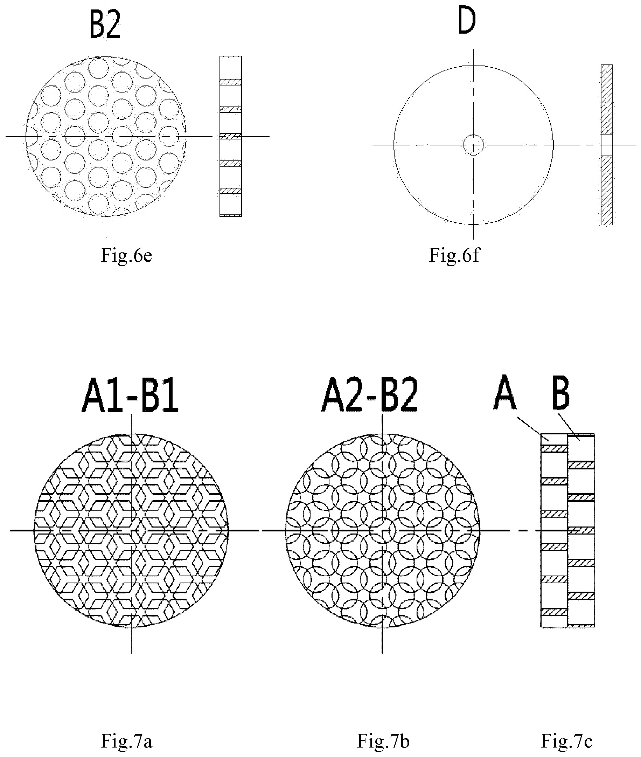

Fig.6e is a stripping sheet diagram of B2 in the stripping component 2-1.
Fig.6f is a stripping sheet diagram of D in the stripping component 2-1.
Fig.7a is a diagram of the A1-B1 combination in the stripping component 2-1.
Fig.7b is a diagram of the A2-B2 combination in the stripping component 2-1.
Fig.7c is a diagram of A-B sheet combination in the stripping component 2-1.
Fig.8 is a diagram of the A-B-C-D sheet combination in the stripping component 2-1.
Fig.9 is a diagram of the dispersing device part.
Fig.10 shows a relation curve between solid content and conductivity of the carbon.
Fig.11 shows a relation curve between solid content and electromotive force of the quantum carbon.
Fig.12 shows the relationship between solid content and PH of the quantum carbon.
Fig.13 shows curves of parameters in start of preparation of quantum carbon.
Fig.14 shows curves of parameters in reaching standard of preparation of quantum carbon.
Fig.15 is a schematic diagram showing concept of quantum carbon oxidation.
Fig.16 is a morphology diagram of graphene oxide according to an embodiment of the present invention.
Fig.17 is an electron microscopic view of quantum carbon.

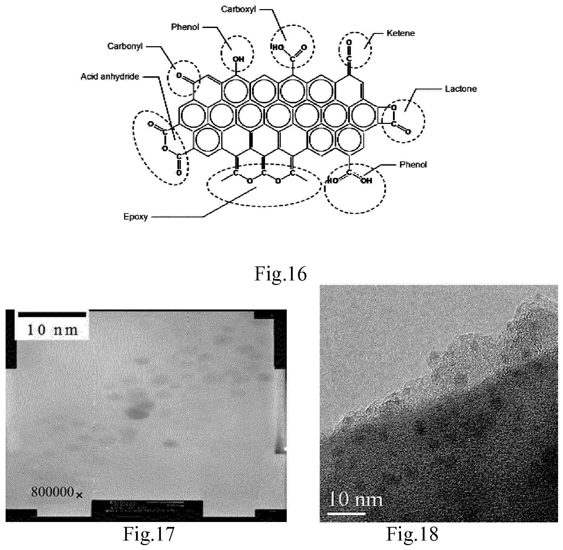

Fig.17 is another electron microscopic view of quantum carbon.

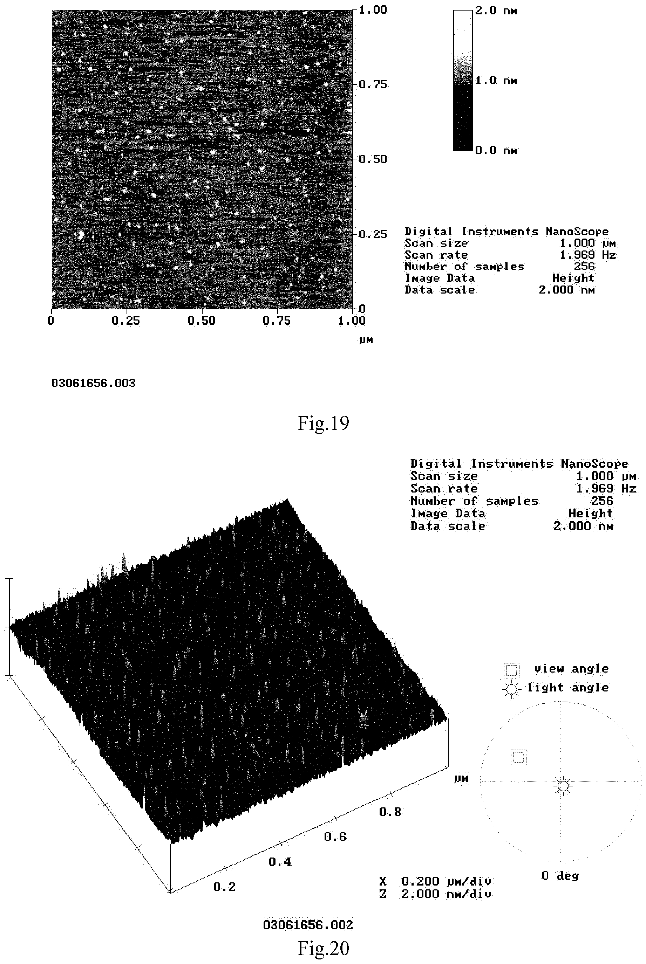

Fig.19 is a STM planar view of the quantum carbon.
Fig.20 is a STM three-dimensional view of the quantum carbon.

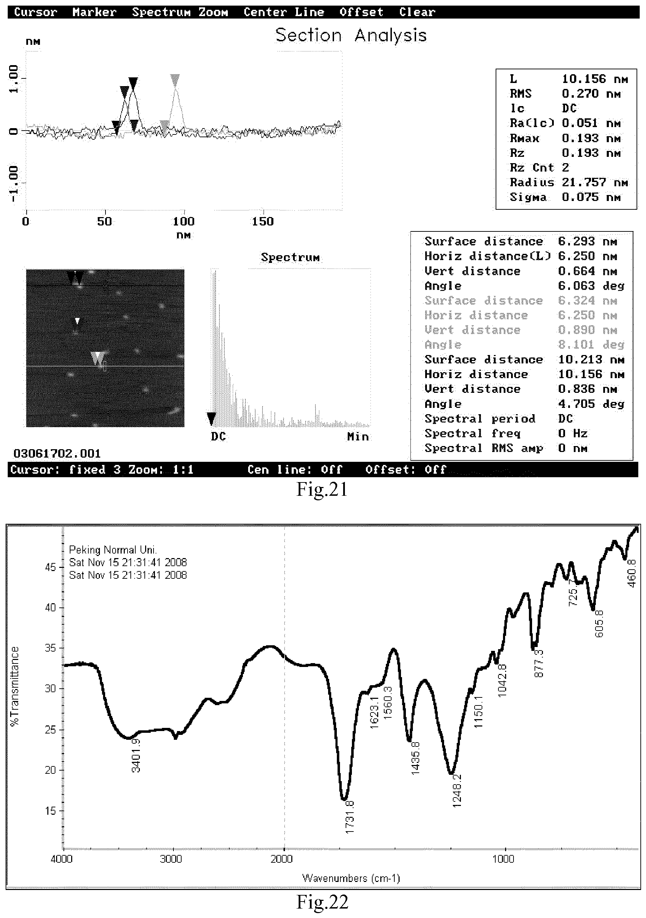

Fig.21 is a STM particle size detection diagram of the quantum carbon.
Fig.22 shows infra-red spectrum of the quantum carbon.

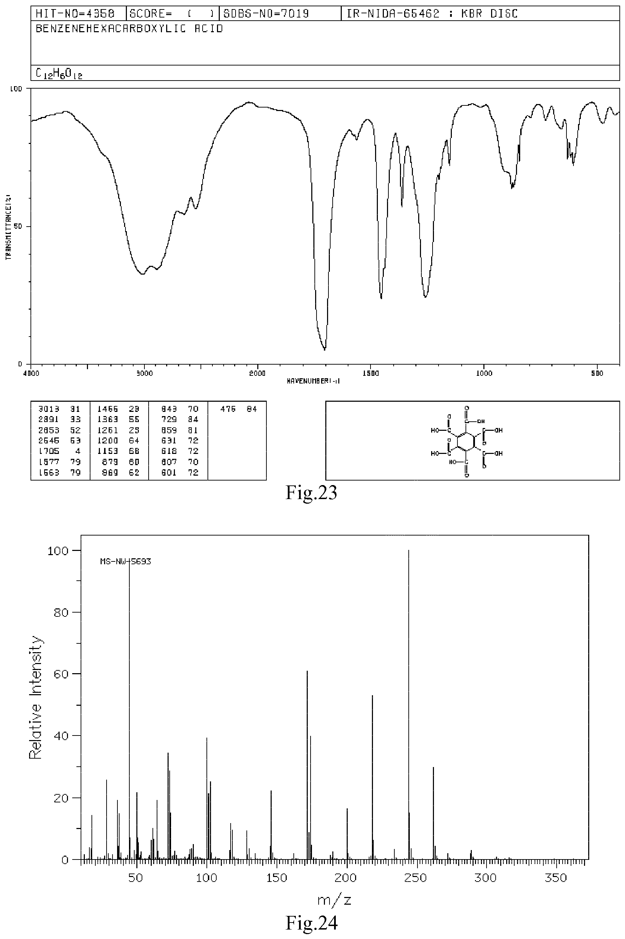

Fig.23 shows an infra-red standard spectrum of the quantum carbon.
Fig.24 shows a mass spectrogram of preparation of phenyl-hexanoic acid by the quantum carbon.

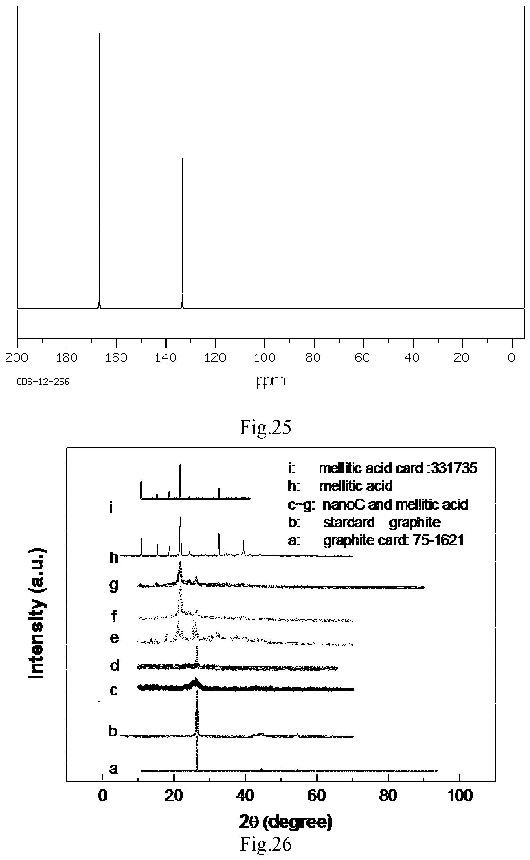

Fig.25 shows C13 chromatogram of the preparation of phenyl-hexanoic acid by quantum carbon.
Fig.26 shows XRD diffractometer analysis of the preparation of phenyl-hexanoic acid by quantum carbon.

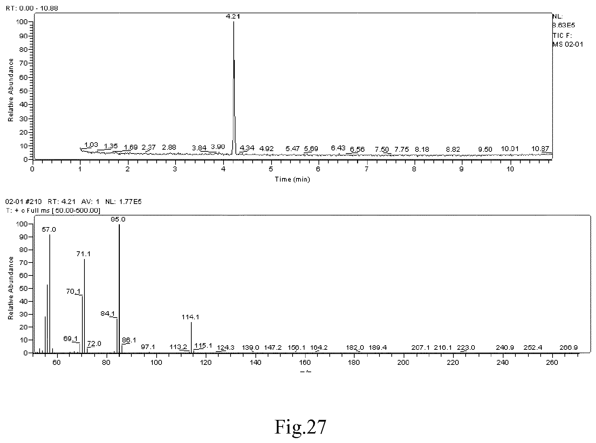

Fig.27 shows gas chromatography and mass spectrometry detection of the quantum carbon (detection result is n-octane C8H18).

### DETAILED DESCRIPTION OF THE INVENTION

The technical solutions of embodiments of the invention will be explained further by embodiments below with the accompanying drawings.

### Embodiment 1:

The quantum carbon of an embodiment of the invention comprises monolayer graphene of carbon particle with diameter of 0.3-100nm, a multilayer graphene, a nano-carbon structural body, in which compound containing carbon, hydrogen, oxygen and nitrogen is on the surface of the carbon particle, contains polycyclic aromatic hydrocarbons, compound containing carbon-oxygen single bond, compound containing carbon-oxygen double bond, and compound containing hydrocarbon bond.

The quantum carbon comprises a quantum carbon solution, the quantum carbon solution is an aqueous solution containing quantum carbon, of which ORP is 280mv-500mv, conductivity σ is 1-10ms/cm, electromotive force is 280mv-380mv, pH value is 1.2-3.2, and concentration is 0.1%-0.45%.

Quantum carbon is composed of carbon particles with the following mass percentage: monolayer grapheme (0.6nm≤p article diameter≤50nm), multilayer grapheme (0.6nm≤particle diameter≤100nm), carbon structure particle (0.6nm≤particle diameter≤200nm), quantum carbon (0.6nm<particle diameter<200nm). The compounds containing carbon, hydrogen, oxygen and nitrogen are mixture containing one or more of polycyclic aromatic hydrocarbons, compound containing carbon-oxygen single bond, compound containing carbon-oxygen double bond, and compound containing hydrocarbon bond, wherein proportion of each element is that C 45%-55%, H 0.2%-2.0%, O 45%-65%.

### Embodiment 2:

An embodiment of the invention relates to equipment for the preparation of quantum carbon, which comprises an electrical control part, an electrochemical oxidation generator part (1), an ion embedding device part (3), a graphite interlayer stripping and dispersing device part (2), a separation device part and a concentrating device part, wherein the electrochemical oxidation generator part (1), the ion embedding device part (3), the graphite interlayer stripping and dispersing device part (2), the separation device part and the concentrating device part are connected head to end in turn.

The electrochemical oxidation generator part (1) includes a housing and at least a set of negative and positive plate generating components (1-1;1-2) arranged in the inner cavity of the housing, a liquid inlet a and an air inlet b are arranged on the left sidewall of the housing, and an outlet c is arranged on the right sidewall of the housing. The positive plate 1-2 is graphitized with three high properties (high density: specific gravity>1.80, high purity: graphite>99.9%, high strength: tensile strength>30.00MPa); the negative plate 1-1 is a metal electrode plate made of 314# stainless steel or 314# stainless steel coated with Pt or Ni. 50 to 300 through-holes with diameter of 2mm are uniformly distributed on the negative plate. 1-3 is a Teflon bracket; 1-4 is a Teflon center shaft; 1-5 is a flexible gap adjusting device for adjusting the gap between 1-1 and 1-2, and the adjusting range is 0.5 mm to 10 mm.

The ion embedding device part (3) comprises a pump body 3-4, a pipe 3-1, a flange pipe connector, and at least one set of ion embedding devices arranged at the end of the pipe 3-1. The ion embedding device is an adjustable high-power focused ultrasonic transducer (with frequency of 20KHz-120KHz and power of 1KW-5KW).

The graphite interlayer stripping part 2-1 comprises four circular metal disks A, B, C, D with different structures, a limit bolt 2-1.1, a housing and two end covers. The four metal disks A, B, C, D with different structures include A1, A2, B1, B2; wherein the A1 is a disk with hexagonal through-holes in uniform distribution, wherein center of the disk is center of central hole. B1 is same as A1 in shape and size of holes thereon, and is a disk with hexagonal through-holes in uniform distribution, but position of center of the disk is of horizontal deviation from that of A1 by 1/2 of straight-line distance between the two holes; A2 is a disk with circle through-holes in uniform distribution, and center of the disk is center of central hole. B2 is same as A2 in shape and size of holes thereon, and is a disk with circle through-holes in uniform distribution, but position of center of the disk is of horizontal deviation from that of metal sheet A2 by 1/2 of straight-line distance between the two holes. The sheet C is a disk, wherein semi-circular through-holes are set on periphery thereof, and at least four limit screw holes uniformly distributed in the disk; the metal sheet structure D has a hole in center. Its combination includes A1-B1, A2-B2, A-B and DABCD.

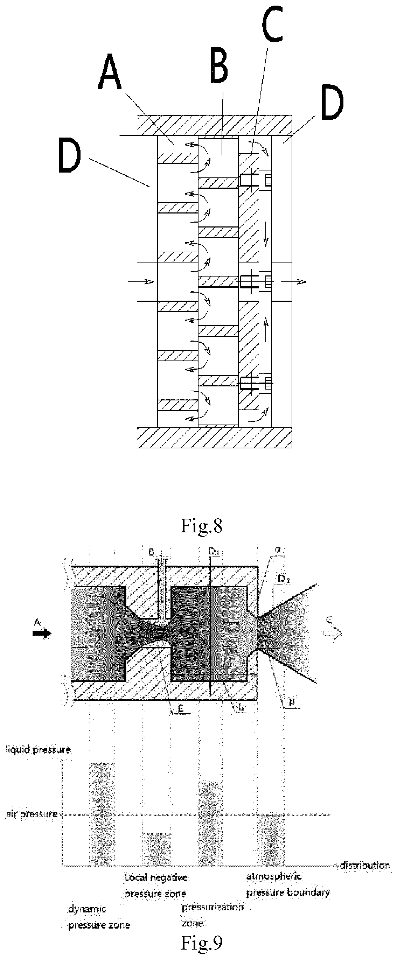

The dispersing device part (2-2) includes a housing, two dispersing cavities which are arranged within the housing and connected in turn, namely, first dispersing cavity and second dispersing cavity, the output end of the second dispersing cavity is connected with output cavity outside the housing. The first dispersing cavity and the second dispersing cavity are two rectangular cavities, and output end of the first dispersing cavity is connected with input end of the second dispersing cavity. The output end of the second dispersing cavity is wedge-shaped with inclination angle α, the output cavity is trapezoid with obliquity angle β between two sides. Distance between the output end and the input end of the second dispersing cavity is L, width thereof is D1, aperture of the output end of the second dispersing cavity is D₂. Upper part of the housing is also provided with a vertical flow channel to junction between the first dispersing cavity and the second dispersing cavity, the channel is an inverted T-shaped channel, and bottom of the channel wraps the junction between the first dispersing cavity and the second dispersing cavity, as shown in Fig.9.

When fluid flows through different pipe diameters and a certain geometric size of the space, in each local section and mass point, different fluid pressure and movement speed of fluid is generated. For liquid fluid entering from inlet A, liquid pressure is transformed to dynamic pressure. Local negative pressure section E is generated from change of pipe diameter, increase of liquid flow rate and release of the pressure. The negative pressure section E has function of inhaling specific gas or fluid medium from the inlet B.

The gas of an embodiment of the invention is air with addition of 0.01% to 1% (proportion to liquid volume), preferably, the addition is 0.1% to 0.5%. Pressurized section is a special space with specific geometry size, in which inhaled gas is formed as gas-liquid mixed phase state; due to expansion of pipe diameter, the flow rate of the liquid decreased, the hydrodynamic pressure of the liquid is converted to hydrostatic pressure, and the liquid is subjected to air-compressed pressurization dissolution. The liquid has become supersaturated after the sufficient air pressurization dissolution. When the outlet C suddenly expands at a certain angle to connect atmospheric pressure, the liquid produces large amount of microbubble precipitation. At the outlet C of the interface at atmospheric pressure, the gas microbubbles integrated into the liquid complete process from formation, growth to explosive collapse in an instant, resulting in abnormal high temperature and high pressure, generating large amount of hydroxyl free radicals (·OH) and hydrogen free radicals (·H) by breaking combination bond between water molecules. Hydroxyl free radicals (·OH) have superstrong oxidation ability, can be used in oxidation modification on monolayer graphene, multilayer graphene and carbon structure particles.

For an example, 0.01≤(D₁-D₂)/L≤0.1, preferably, (D₁-D₂)/L=0.05; 35°≤α≤75°, preferably, α=45°; 45°≤β≤85°, preferably, β=65°.

### Embodiment 3

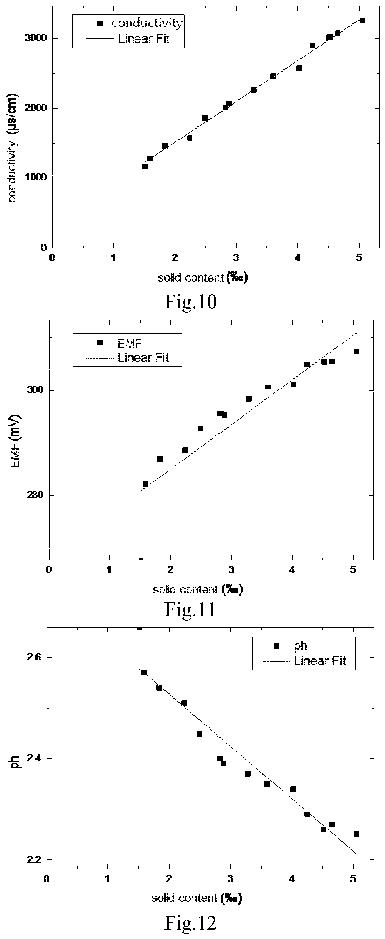

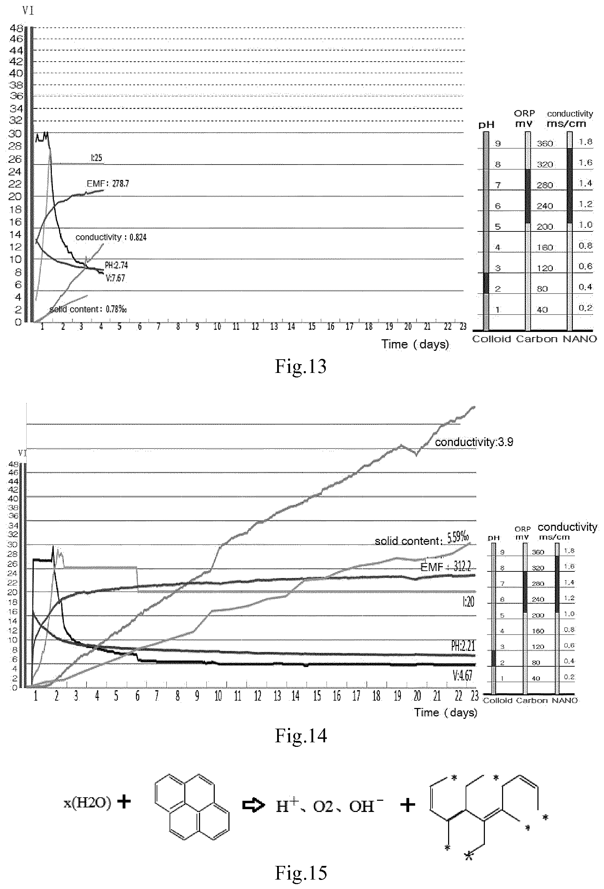

A method for preparing quantum carbon according to an embodiment comprises the following steps:
(1) preparing deionized water with pH value of 6.5-7.2 and resistance value of 180 Megohm by using multilayer reverse osmosis membrane; a liquid inlet a is arranged on the left wall of the housing of the electrochemical oxidation generator part 1 to enter the generator.
(2) using H₂O₂ agent (concentration of 30%) as 0.15% adding volume of water in the generator, making it enter the generator through the liquid inlet a.
(3) The electrochemical oxidation generator part 1 includes a housing and at least a set of negative and positive plate generating components (1-1;1-2) arranged in the inner cavity of the housing; the positive plate 1-2 is graphitized graphite plate with three high properties (high density: specific gravity>1.80, high purity: graphite>99.9%, high strength: tensile strength>30.00MPa); the negative plate 1-1 is a metal electrode plate made of 314# stainless steel or 314# stainless steel coated with Pt or Ni, 50 to 300 through-holes with diameter of 2mm are uniformly distributed thereon; 1-3 is a Teflon bracket; 1-4 is a Teflon center shaft; 1-5 is a flexible gap adjusting device for adjusting the gap between 1-1 and 1-2, and the adjusting range is 0.5 mm to 10 mm.
(4) by the steps (1) and (2), the water and the agent entering into the electrochemical anodizing device 1, and standing not less than 24 hours; a preparation procedure is then initiated by a control cabinet; the control cabinet provides a high frequency pulse DC power supply, wherein output DC power supply is 0-150V, 0-100A, for regulating application of the electrochemical oxidation generator part 1, and provides multi-frequency band interactive emission wave with output end power of 1-5KVA, 20KHz-120KHz, for regulating application of the adjustable high-power focused ultrasonic transducers of ion embedding device.
(5) primary carbon sol liquid prepared by the electrochemical oxidation generator part 1 being transported into the ion embedding device part 3 under the 3kg/cm³-10kg/cm³ pressure provided by pump 3-4, for embedding preparation of hydrogen and oxygen ions between graphite layers; after preparation by the graphite interlayer stripping part 2-1 and the dispersing device part 2-2 of the graphite interlayer stripping and dispersing device part 2, the carbon sol liquid is subjected to test with various parameters in the graphite interlayer stripping part and the dispersing device part device. When indices of the carbon sol liquid are within range of predetermined values, quantum carbon products of various forms are prepared by means of subsequent purification and concentration and so on to basic liquid as quantum carbon (that is, concentration or separation is carried out by the concentration device and the separation device of the embodiment; since both concentration and separation devices can adopt traditional separation and concentration technology, details thereof is omitted here for concision). If the indices of the carbon sol liquid are not within the range of predetermined values, the system will turn on pump 4 to make the carbon sol liquid return to the electrochemical oxidation generator part 1 for cycle preparation
(6) The indices of the carbon sol liquid in (5) include that: pH value of the quantum carbon mixture liquid is 1.2 to 2.2, ORP value of electromotive force is 280mv to 380mv, conductivity value is 1.5ms/cm to 5.0ms/cm, which conform trend in Figs.13 and 14; solid-liquid concentration is based on unification trends of conductivity-solid content in Fig.10, electromotive force-solid content in Fig.11 and the pH-solid content in Fig.12, and the solid content is 0.4% to 0.6%; temperature of the carbon sol liquid is 40°C to 70°C; wherein, the surface of pure carbon particles should be alkaline, because the microcrystalline surface is composed of aromatic polycyclic structures, which are Lewis bases, and can likely absorb hydrogen ions in water and make the surrounding liquids alkaline; acidity occurs when the surface bond oxygen counteracts Lewis basicity to a certain extent; pH value is symbol of the oxygen content on the surface of quantum carbon particles; pH value mainly depends on number of oxygen-containing groups on the surface of quantum carbon particles.

Result from linear regression of the relation between conductivity and solid content based on the conductivity

| | Intercept | | Slope | | Statistics |
|---|---|---|---|---|---|
| | Value | Standard Error | Value | Standard Error | Adj. R-Square |
| Conductivity | 346.77842 | 47.15029 | 583.85738 | 13.89943 | 0.99268 |
| EMF | 268.06348 | 3.63494 | 8.47968 | 1.07154 | 0.82579 |
| pH value | 2.73299 | 0.02768 | -0.10313 | 0.00816 | 0.92431 |

Each index in (5) of the carbon sol liquid involves detection of particle diameter of the quantum carbon particle, as well as distribution of particle diameter and frequency (Figs.17, 18, 19, 20, 21). The particle diameter and distribution of particle diameter and frequency of quantum carbon are in the range of 0.6nm to 1.0nm, which has gone beyond the nanometer scale of 1nm-100nm.

The quantum carbon solution is obtained after those parameters reach standard. The quantum carbon mixture liquid is subjected to centrifugation and fractionation process by a high speed centrifuge with a rotating speed of 15000rpm to 30000rpm set in a fractionation device.
(7)
7-1, after centrifugation process on the quantum carbon mixture liquid, benzenehexacarboxylic acid with 0.001% to 0.010% of mass percentage is added to processed solution, as crystal seed, then stirring at high speed for 2 hours and heating to 70°C to 80°C, standing for more than 20 hours, lowering temperature to room temperature, so as to obtain hydrocarbon oxygen compound of benzenehexacarboxylic acid crystals with high purity (Figs.22, 23, 24, 25, 26).
7-2, after centrifugation process on the quantum carbon mixture liquid, 0.1% to 1.0% alkane, 0.1% to 1.0% carbon alcohol or mixture of alkane and carbon alcohol with any proportion is added to the processed solution. The alkanes are such alkanes with C1-C12 carbon, one or more of which form mixed hydrocarbon. The carbon alcohol is carbon alcohol with C1-C12 carbon, one or more of which form mixed alcohols. It is subjected to high speed stirring for 1 hour and resting for 12 hours, to obtain hydrocarbon compound of octane C8H18 with high purity (Fig.27).

The specific embodiments described herein are only illustrative of the spirit of the present invention. Technical personnel in the technical field of the invention may make various modifications or additions to the specific embodiments described or replace them in a similar manner. However, it will not deviate from the spirit of the present invention or go beyond the scope defined in the appended claims.

## Claims

1. Quantum carbon, which is crystalline body of quantum carbon solution, the crystalline body is nano-carbon structural body comprising monolayer graphene or multilayer graphene, wherein surface layer of the crystalline body is selected from compound containing carbon, hydrogen, oxygen and nitrogen which includes compound containing carboxy-oxygen single bond, compound containing carboxy-oxygen double bond, mixture containing hydrocarbon compound, proportion of each element in the mixture is 45%-60% of C, 0.2% - 5.0% of H, and 35% -54% of O,
wherein the quantum carbon solution is aqueous solution containing quantum carbon, which comprises carbon particles as following: monolayer grapheme with 0.6nm≤particle diameter≤50nm, multilayer grapheme with 0.6nm≤particle diameter≤100nm, quantum carbon 0.6nm<particle diameter<200nm.

2. Quantum carbon as in Claim 1, wherein ORP of the quantum carbon solution is 280mv to 500mv, conductivity σ is 1-10ms/cm, electromotive force is 280mv to 380mv, pH value is 1.2-3.2, and concentration is 0.1%-0.45%.

3. A device implementing method for preparing quantum carbon as in Claim 1, comprising an electrochemical oxidation generator part (1), an ion embedding device part (3), a graphite interlayer stripping and dispersing device parts (2), a separating device part and a concentration device part which are connected head to end in turn,
wherein an electrical control part is provided for controlling operation of the electrochemical oxidation generator part (1), the ion embedding device part (3), the graphite interlayer stripping and dispersing device parts (2), the separation device part and the concentration device part.

4. The device implementing method for preparing quantum carbon as in Claim 3, wherein the electrochemical oxidation generator part (1) includes a housing and at least a set of positive and negative plate generating components arranged in inner cavity of the housing,
wherein left wall of the housing is provided with an liquid inlet a and an air inlet b, right wall of the housing is provided with an outlet c; bottom of the housing is provided with a U-shaped bracket (1-3), which has a central shaft (1-4) on the upper shelf, and the positive and negative plate generating components are set on the center shaft (1-4).

5. The device implementing method for preparing quantum carbon as in Claim 3, wherein the positive and negative plate generating components include a positive plate (1-2) and a negative plate (1-1), which are arranged vertically, the positive plate (1-2) is graphitized with three high properties; the negative plate (1-1) is a metal electrode plate made of 314# stainless steel or 314# stainless steel coated with Pt or Ni, 50 to 300 through-holes with diameter of 1 to 2mm are uniformly distributed on the negative plate (1-1), the center shaft (1-4) is provided with a flexible gap adjusting device (1-5) for adjusting the gap between the positive plate (1-2) and the negative plate (1-1), and the adjusting range is 0.5 mm to 10 mm;
the flexible gap adjusting device (1-5) includes a sliding plate perpendicular to the center shaft (1-4) and an adjusting bolt fixed on the sliding plate, one end of adjusting spring is in contact with the positive and negative plate components and the other end thereof is in contact with the sliding plate, an insulated spring is set between the positive plate (1-2) and the negative plate (1-1).

6. The device implementing method for preparing quantum carbon as in Claim 4, wherein the ion embedding device (3) includes a pump body (3-4), a pipe system composed of several of horizontal pipes and L-shaped pipes and flanges (3-2), wherein an exciting rod (3-3) is arranged at corner of the L-shaped pipes; one end of the pipe system is connected with output end of the pump body (3-4), a pipe end (3-1) on the other end of the pipe system is coupled with at least one set of ion embedders, which are adjustable high-power focused ultrasonic transducers.

7. The device implementing method for preparing quantum carbon as in Claim 4, wherein the graphite layer stripping part comprises a housing, a stripping component arranged in the housing, an inlet and an outlet are set at two ends of the housing and closed through an end cover; the strip component includes a vertically arranged metal sheet A, a metal sheet B, a metal sheet C and a metal sheet D; corresponding structures of the metal sheet A, the metal sheet B, the metal sheet C and the metal sheet D are metal sheet structure A1, metal sheet A2, metal sheet structure B1, and metal sheet B2, combination thereof includes metal sheet A-metal sheet C, or metal sheet B-metal sheet D, or metal sheet A-metal sheet B, or metal sheet D-metal sheet A-metal sheet B-metal sheet C-metal sheet D,
wherein the metal sheet structure A1 is a disk with hexagonal through-holes in uniform distribution, wherein center of the disk is center of central hole; the metal sheet B1 is same as the metal sheet A1 in shape and size of holes thereon, and is a disk with hexagonal through-holes in uniform distribution, but position of center of the disk is of horizontal deviation from that of metal sheet A1 by 1/2 of straight-line distance between the two holes; the metal sheet structure A2 is a disk with circle through-holes in uniform distribution, and center of the disk is center of central hole; the metal sheet B2 is same as the metal sheet A2 in shape and size of holes thereon, and is a disk with circle through-holes in uniform distribution, but position of center of the disk is of horizontal deviation from that of metal sheet A2 by 1/2 of straight-line distance between the two holes; the metal sheet structure C is a disk, wherein semi-circular through-holes are set on periphery thereof, and at least four limit screw holes uniformly distributed in the disk; the metal sheet structure D has a hole in center. Its combination includes A1-B1, A2-B2, A-B and DABCD;
the dispersing device part (2-2) includes a housing, two dispersing cavities which are arranged within the housing and connected in turn, namely, first dispersing cavity and second dispersing cavity, the output end of the second dispersing cavity is connected with output cavity outside the housing; the first dispersing cavity and the second dispersing cavity are two rectangular cavities, and output end of the first dispersing cavity is connected with input end of the second dispersing cavity; the output end of the second dispersing cavity is wedge-shaped with inclination angle α, the output cavity is trapezoid with obliquity angle β between two sides; distance between the output end and the input end of the second dispersing cavity is L, width thereof is D1, aperture of the output end of the second dispersing cavity is D₂; upper part of the housing is also provided with a vertical flow channel to junction between the first dispersing cavity and the second dispersing cavity, the channel is an inverted T-shaped channel, bottom thereof is rectangular and connected to junction between the first dispersing cavity and the second dispersing cavity; wherein 0.01≤(D₁-D₂)/L≤0.1, 35°≤α≤75°, 45°≤β≤85°.

8. A method for preparing quantum carbon, comprising the following steps:
Step 1, preparing deionized water with pH value of 6.5-7.2 and resistance value of 180 Megohm by using multilayer reverse osmosis membrane; a liquid inlet a is arranged on the left wall of the housing of the electrochemical oxidation generator part (1) to enter the generator;
Step 2, using H₂O₂ agent with concentration of 30%, as 0.15% adding volume of water in the generator, making it enter the generator through the liquid inlet a;
Step 3, by the steps 1 and 2, the water and the agent entering into the electrochemical oxidation generator part, and standing not less than 24 hours; a preparation procedure is then initiated by a control cabinet; the control cabinet provides a high frequency pulse DC power supply, wherein output DC power supply is 0-150V, 0-100A, for regulating application of the electrochemical oxidation generator part (1), and provides multi-frequency band interactive emission wave with output end power of 1-5KVA, 20KHz-120KHz, for regulating application of the adjustable high-power focused ultrasonic transducers of ion embedding device;
Step 4, primary carbon sol liquid prepared by the electrochemical oxidation generator being transported into the ion embedding device part under the 3kg/cm³-10kg/cm³ pressure provided by pump, to prepare hydrogen and oxygen ions between graphite layers; after preparation by the graphite interlayer stripping part and the dispersing device part of the graphite interlayer stripping and dispersing device part, the carbon sol liquid being subjected to test with various parameters in the graphite interlayer stripping part and the dispersing device part device; when indices of the carbon sol liquid are within range of predetermined values, quantum carbon products of various forms being prepared by means of subsequent purification and concentration and so on to basic liquid as quantum carbon; if the indices of the carbon sol liquid are not within the range of predetermined values, the system turning on pump 4 to make the carbon sol liquid return to the electrochemical oxidation generator part for cycle preparation,
wherein indices of the carbon sol liquid include that: pH value of the quantum carbon mixture liquid is 1.2 to 2.2, ORP value of electromotive force is 280mv to 380mv, conductivity value is 1.5ms/cm to 5.0ms/cm, solid-liquid concentration is based on unification trend of conductivity-solid content, electromotive force-solid content and the pH-solid content, and the solid content is 0.4% to 0.6%; temperature of the carbon sol liquid is 40°C to 70°C,
wherein each index of the carbon sol liquid involves detection of particle diameter of the quantum carbon particle, as well as distribution of particle diameter and frequency; the particle diameter and distribution of particle diameter and frequency of quantum carbon are in the range of 0.6nm to 1.0nm,
wherein the quantum carbon solution is obtained after those parameters reach standard, the quantum carbon mixture liquid is subjected to centrifugation and fractionation process by a high speed centrifuge with a rotating speed of 15000rpm to 30000rpm set in a fractionation device

9. The method for preparing quantum carbon as in Claim 8, wherein after centrifugation process on the quantum carbon mixture liquid, benzenehexacarboxylic acid with 0.001% to 0.010% of mass percentage is added to processed solution, as crystal seed, then stirring at high speed for 2 hours and heating to 70°C to 80°C, standing for more than 20 hours, lowering temperature to room temperature, so as to obtain hydrocarbon oxygen compound of benzenehexacarboxylic acid crystals with high purity.

10. The method for preparing quantum carbon as in Claim 8, wherein after centrifugation process on the quantum carbon mixture liquid, 0.1% to 1.0% alkane, 0.1% to 1.0% carbon alcohol or mixture of alkane and carbon alcohol with any proportion is added to the processed solution; the alkane is such alkane with C1-C12 carbon, one or more of which form mixed hydrocarbon; the carbon alcohol is carbon alcohol with C1-C12 carbon, one or more of which form mixed alcohols, then subjected to high speed shear stirring for 1 hour, while applying five band frequencies ultrasonic dispersion to mixed liquid, applying frequencies of five bands sequentially from low to high with applying time of one minute for frequencies of each band; the frequencies of the five bands being applied in turn as an application group, and several application groups being carried out continuously until the ultrasonic dispersion reached 1 hour, and then rest for 12 hours, obtaining a light yellow supernatant liquid; by combination of gas chromatography and mass spectrometry, the light yellow liquid component is n-octane C8H18 hydrocarbon, and the frequencies of the five bands are 20KHz, 45KHz, 65KHz, 100KHz and 120KHz in turn.
